# EUROPEAN PATENT APPLICATION

(11) **EP 4 117 187 A1**
(43) Date of publication of application: **11.01.2023**
(21) Application number: 20925020.8
(22) Date of filing: 20.03.2020
(51) Int. Cl.: H04B 1/40

(54) **RECEIVING APPARATUS, TRANSMITTING APPARATUS, AND SIGNAL PROCESSING METHOD**

(71) Applicant: Huawei Technologies Co., Ltd., Shenzhen, Guangdong 518129, (CN)
(72) Inventor: YUAN, Shutian, Shenzhen, Guangdong 518129 (CN)
(74) Representative: Isarpatent
(86) International application number: PCT/CN2020/080479
(87) International publication number: WO 2021/184371

(57) **Abstract**

This application provides a receiving apparatus, a transmitting apparatus, and a signal processing method, which can be applied to the communication field, for example, a cockpit domain. The receiving apparatus includes at least two first radio frequency signal processing modules and a first analog signal processing module. The at least two first radio frequency signal processing modules are connected to the first analog signal processing module by using at least one first switch circuit. The first radio frequency signal processing module is configured to obtain a radio frequency signal, to obtain a first analog signal. The first analog signal processing module is configured to obtain a first baseband signal based on the first analog signal. By implementing this application, a structure of the receiving apparatus can be simple and lightweight.

## Description

### TECHNICAL FIELD

This application relates to the field of wireless communications technologies, and in particular, to a receiving apparatus, a transmitting apparatus, and a signal processing method, and is particularly applicable to the communication field, for example, a cockpit domain.

### BACKGROUND

In the field of radio frequency, importance of a transceiver is self-evident. Currently, a frequently used radio frequency receiver mainly includes a superheterodyne receiver and a zero-intermediate-frequency receiver.

The zero-intermediate-frequency receiver is used as an example. The zero-intermediate-frequency receiver is widely used due to its prominent performance advantages (for example, a simple structure, low power consumption, and low costs). Generally, the zero-intermediate-frequency receiver can work in a wireless communication spectrum less than 6 GHz. However, when a communication frequency band of the zero-intermediate-frequency receiver is extended to a millimeter wave band (for example, 26 GHz, 28 GHz, or 60 GHz), because a communication frequency in the millimeter wave band is very high, when the zero-intermediate-frequency receiver performs frequency conversion processing on the communication frequency to obtain a baseband signal, it is likely that a manner in which a baseband processor performs filtering processing cannot meet anti-interference and noise suppression requirements. This undoubtedly degrades working performance of the zero-intermediate-frequency transceiver.

To implement taking working performance of the transceiver in a plurality of different communication frequency bands into consideration, a structure of the transceiver is usually excessively complex, and costs are excessively high. Therefore, how to provide a transceiver with a simple structure to ensure working performance in the plurality of different frequency bands is a technical problem that needs to be urgently resolved.

### SUMMARY

This application provides a receiving apparatus, a transmitting apparatus, and a signal processing method. Because the apparatus uses a reused structure, the apparatus has a simple and lightweight structure, and can ensure working performance in a plurality of different operating frequency bands.

According to a first aspect, an embodiment of this application provides a receiving apparatus. The apparatus includes at least two first radio frequency signal processing modules and a first analog signal processing module. The at least two first radio frequency signal processing modules are connected to the first analog signal processing module by using at least one first switch circuit. The first radio frequency signal processing module is configured to obtain a radio frequency signal, to obtain a first analog signal. The first analog signal processing module is configured to obtain a first baseband signal based on the first analog signal.

By implementing this embodiment of this application, the receiving apparatus is switched by using the first switch circuit, and the at least two first radio frequency signal processing modules can process radio frequency signals within different frequency ranges, to reduce complexity and costs of the receiving apparatus. It may be understood that, because the receiving apparatus can receive radio frequency signals within different frequency ranges by using the at least two first radio frequency signal processing modules, anti-interference performance of the receiving apparatus can be improved. In addition, because the first analog signal processing module can be reused, design difficulty in an analog/digital signal conversion process is reduced, and a development burden of a subsequent digital signal processing part is reduced.

In a possible implementation, the at least two first radio frequency signal processing modules include a second radio frequency signal processing module and a third radio frequency signal processing module. The second radio frequency signal processing module is connected to a first port of the at least one first switch circuit, and the third radio frequency signal processing module is connected to a second port of the at least one first switch circuit. The second radio frequency signal processing module is configured to obtain a first radio frequency signal, and the third radio frequency signal processing module is configured to obtain a second radio frequency signal. The first radio frequency signal and the second radio frequency signal fall within different frequency ranges. By implementing this embodiment of this application, because the receiving apparatus uses a reused structure, the second radio frequency signal processing module and the third radio frequency signal processing module can process radio frequency signals within different frequency ranges by being switched by using the first switch circuit, to reduce the complexity and the costs of the receiving apparatus. It may be understood that, because the receiving apparatus can receive radio frequency signals within different frequency ranges by using the at least two first radio frequency signal processing modules, the anti-interference performance of the receiving apparatus can be improved. In addition, because the first analog signal processing module can be reused, the design difficulty in the analog/digital signal conversion process is reduced, and the development burden of the subsequent digital signal processing part is reduced.

In a possible implementation, the first port of the at least one first switch circuit is in a connected state. The second radio frequency signal processing module is configured to obtain the first radio frequency signal and generate a first intermediate-frequency analog signal. The first intermediate-frequency analog signal is obtained by performing frequency mixing on the first radio frequency signal. The first analog signal processing module is configured to generate the first baseband signal based on the first intermediate-frequency analog signal. By implementing this embodiment of this application, because the second radio frequency signal processing module is connected to the first port of the at least one first switch circuit, when the first port of the at least one first switch circuit is in the connected state, the first radio frequency signal can be processed by using the second radio frequency signal processing module, and the first baseband signal is generated by using the first analog signal processing module. In this implementation, the receiving apparatus can work in a high-frequency communication frequency band by switching the first switch circuit.

In a possible implementation, the second port of the at least one first switch circuit is in a connected state. The third radio frequency signal processing module is configured to obtain the second radio frequency signal and generate a first amplified analog signal. The first amplified analog signal is obtained by amplifying the second radio frequency signal. The first analog signal processing module is configured to generate the first baseband signal based on the first amplified analog signal. By implementing this embodiment of this application, because the third radio frequency signal processing module is connected to the second port of the at least one first switch circuit, when the second port of the at least one first switch circuit is in the connected state, the second radio frequency signal can be processed by using the third radio frequency signal processing module, and the first baseband signal is generated by using the first analog signal processing module. In this implementation, the receiving apparatus can work in a low-frequency communication frequency band by switching the first switch circuit.

In a possible implementation, the second radio frequency signal processing module includes a first low noise amplifier and a first down-conversion mixer. The third radio frequency signal processing module includes a second low noise amplifier. The first analog signal processing module includes a first amplifier and at least two first quadrature I/Q processing circuits. A first I-channel processing circuit includes a second down-conversion mixer, a first variable-gain amplifier, a first low-pass filter, and a second amplifier. A first Q-channel processing circuit includes a third down-conversion mixer, a second variable-gain amplifier, a second low-pass filter, and a third amplifier.

In a possible implementation, the apparatus further includes at least one first antenna. The at least one first antenna is connected to at least one of the second radio frequency signal processing module or the third radio frequency signal processing module.

According to a second aspect, an embodiment of this application provides a signal processing method. The method is applied to a receiving apparatus. The apparatus includes at least two first radio frequency signal processing modules and a first analog signal processing module. The at least two first radio frequency signal processing modules are connected to the first analog signal processing module by using at least one first switch circuit. The method includes: The first radio frequency signal processing module obtains a radio frequency signal, to obtain a first analog signal. The first analog signal processing module obtains a first baseband signal based on the first analog signal.

By implementing this embodiment of this application, the receiving apparatus is switched by using the first switch circuit, and the at least two first radio frequency signal processing modules can process radio frequency signals within different frequency ranges, to reduce complexity and costs of the receiving apparatus.

In a possible implementation, the at least two radio frequency signal processing modules include a second radio frequency signal processing module, and the second radio frequency signal processing module is connected to a first port of the at least one first switch circuit. The first port of the at least one first switch circuit is in a connected state. That the first radio frequency signal processing module obtains a radio frequency signal, to obtain a first analog signal includes: The second radio frequency signal processing module obtains a first radio frequency signal and generates a first intermediate-frequency analog signal. The first intermediate-frequency analog signal is obtained by performing frequency mixing on the first radio frequency signal. That the first analog signal processing module obtains a first baseband signal based on the first analog signal includes: The first analog signal processing module generates the first baseband signal based on the first intermediate-frequency analog signal. By implementing this embodiment of this application, because the second radio frequency signal processing module is connected to the first port of the at least one first switch circuit, when the first port of the at least one first switch circuit is in the connected state, the first radio frequency signal can be processed by using the second radio frequency signal processing module, and the first baseband signal is generated by using the first analog signal processing module. In this implementation, the receiving apparatus can process a high-frequency radio frequency signal by switching the first switch circuit.

In a possible implementation, the at least two radio frequency signal processing modules include a third radio frequency signal processing module, and the third radio frequency signal processing module is connected to a second port of the at least one first switch circuit. The second port of the at least one first switch circuit is in a connected state. That the first radio frequency signal processing module obtains a radio frequency signal, to obtain a first analog signal includes: The third radio frequency signal processing module obtains a second radio frequency signal and generates a first amplified analog signal. The first amplified analog signal is obtained by amplifying the second radio frequency signal. That the first analog signal processing module obtains a first baseband signal based on the first analog signal includes: The first analog signal processing module generates the first baseband signal based on the first amplified analog signal. By implementing this embodiment of this application, because the third radio frequency signal processing module is connected to the second port of the at least one first switch circuit, when the second port of the at least one first switch circuit is in the connected state, the second radio frequency signal can be processed by using the third radio frequency signal processing module, and the first baseband signal is generated by using the first analog signal processing module. In this implementation, the receiving apparatus can process a low-frequency radio frequency signal by switching the first switch circuit.

According to a third aspect, an embodiment of this application provides a transmitting apparatus. The apparatus includes at least two fourth radio frequency signal processing modules and a second analog signal processing module. The at least two fourth radio frequency signal processing modules are connected to the second analog signal processing module by using at least one second switch circuit. The second analog signal processing module is configured to obtain a second analog signal based on a second baseband signal. The fourth radio frequency signal processing module is configured to obtain a radio frequency signal based on the second analog signal.

By implementing this embodiment of this application, the transmitting apparatus is switched by using the second switch circuit, and the at least two fourth radio frequency signal processing modules can generate radio frequency signals within different frequency ranges, to reduce complexity and costs of the transmitting apparatus. It may be understood that, because the transmitting apparatus can transmit radio frequency signals within different frequency ranges by using the at least two fourth radio frequency signal processing modules, anti-interference performance of the transmitting apparatus can be improved. In addition, because the second analog signal processing module can be reused, design difficulty in an analog/digital signal conversion process is reduced.

In a possible implementation, the at least two fourth radio frequency signal processing modules include a fifth radio frequency signal processing module and a sixth radio frequency signal processing module. The fifth radio frequency signal processing module is connected to a first port of the at least one second switch circuit, and the sixth radio frequency signal processing module is connected to a second port of the at least one second switch circuit. The fifth radio frequency signal processing module is configured to generate a third radio frequency signal, and the sixth radio frequency signal processing module is configured to generate a fourth radio frequency signal. The third radio frequency signal and the fourth radio frequency signal fall within different frequency ranges. By implementing this embodiment of this application, because the transmitting apparatus uses a reused structure, the fifth radio frequency signal processing module and the sixth radio frequency signal processing module can generate radio frequency signals within different frequency ranges by being switched by using the second switch circuit, to reduce the complexity and the costs of the transmitting apparatus. It may be understood that, because the transmitting apparatus can transmit radio frequency signals within different frequency ranges by using the at least two fourth radio frequency signal processing modules, the anti-interference performance of the transmitting apparatus can be improved. In addition, because the second analog signal processing module can be reused, the design difficulty in the analog/digital signal conversion process is reduced.

In a possible implementation, the first port of the at least one second switch circuit is in a connected state. The second analog signal processing module is configured to generate a second intermediate-frequency analog signal based on the second baseband signal. The fifth radio frequency signal processing module is configured to obtain the second intermediate-frequency analog signal and generate the third radio frequency signal. The third radio frequency signal is obtained by performing frequency mixing on the second intermediate-frequency analog signal. By implementing this embodiment of this application, because the fifth radio frequency signal processing module is connected to the first port of the at least one second switch circuit, when the first port of the at least one second switch circuit is in the connected state, the third radio frequency signal can be generated by using the fifth radio frequency signal processing module. In this implementation, the transmitting apparatus can transmit a high-frequency radio frequency signal by switching the second switch circuit.

In a possible implementation, the second port of the at least one second switch circuit is in a connected state. The second analog signal processing module is configured to generate a second intermediate-frequency analog signal based on the second baseband signal. The sixth radio frequency signal processing module is configured to obtain the second intermediate-frequency analog signal and generate the fourth radio frequency signal. The fourth radio frequency signal is obtained by performing radio frequency power amplification on the second intermediate-frequency analog signal. By implementing this embodiment of this application, because the sixth radio frequency signal processing module is connected to the second port of the at least one second switch circuit, when the second port of the at least one second switch circuit is in the connected state, the fourth radio frequency signal can be generated by using the sixth radio frequency signal processing module. In this implementation, the transmitting apparatus can transmit a low-frequency radio frequency signal by switching the second switch circuit.

In a possible implementation, the second analog signal processing module includes at least two second quadrature I/Q processing circuits and a fourth amplifier. A second I-channel processing circuit includes a first up-conversion mixer, a third variable-gain amplifier, a third low-pass filter, and a fifth amplifier. A second Q-channel processing circuit includes a second up-conversion mixer, a fourth variable-gain amplifier, a fourth low-pass filter, and a sixth amplifier. The fifth radio frequency signal processing module includes a first radio frequency power amplifier and a third up-conversion mixer. The sixth radio frequency signal processing module includes a second radio frequency power amplifier.

In a possible implementation, the apparatus further includes at least one second antenna. The at least one second antenna is connected to at least one of the fifth radio frequency signal processing module or the sixth radio frequency signal processing module.

According to a fourth aspect, an embodiment of this application provides a signal processing method. The method is applied to a transmitting apparatus. The apparatus includes at least two fourth radio frequency signal processing modules and a second analog signal processing module. The at least two fourth radio frequency signal processing modules are connected to the second analog signal processing module by using at least one second switch circuit. The method includes: The second analog signal processing module obtains a second analog signal based on a second baseband signal. The fourth radio frequency signal processing module obtains a radio frequency signal based on the second analog signal.

By implementing this embodiment of this application, the transmitting apparatus is switched by using the second switch circuit, and the at least two fourth radio frequency signal processing modules can generate radio frequency signals within different frequency ranges, to reduce complexity and costs of the transmitting apparatus.

In a possible implementation, the at least two fourth radio frequency signal processing modules include a fifth radio frequency signal processing module, and the fifth radio frequency signal processing module is connected to a first port of the at least one second switch circuit. The first port of the at least one second switch circuit is in a connected state. That the second analog signal processing module obtains a second analog signal based on a second baseband signal includes: The second analog signal processing module generates a second intermediate-frequency analog signal based on the second baseband signal. That the fourth radio frequency signal processing module obtains a radio frequency signal based on the second analog signal includes: The fifth radio frequency signal processing module obtains the second intermediate-frequency analog signal and generates a third radio frequency signal. The third radio frequency signal is obtained by performing frequency mixing on the second intermediate-frequency analog signal. By implementing this embodiment of this application, because the fifth radio frequency signal processing module is connected to the first port of the at least one second switch circuit, when the first port of the at least one second switch circuit is in the connected state, the third radio frequency signal can be generated by using the fifth radio frequency signal processing module. In this implementation, the transmitting apparatus can transmit a high-frequency radio frequency signal by switching the second switch circuit.

In a possible implementation, the at least two fourth radio frequency signal processing modules include a sixth radio frequency signal processing module, and the sixth radio frequency signal processing module is connected to a second port of the at least one second switch circuit. The second port of the at least one second switch circuit is in a connected state. That the second analog signal processing module obtains a second analog signal based on a second baseband signal includes: The second analog signal processing module generates a second intermediate-frequency analog signal based on the second baseband signal. That the fourth radio frequency signal processing module obtains a radio frequency signal based on the second analog signal includes: The sixth radio frequency signal processing module obtains the second intermediate-frequency analog signal and generates a fourth radio frequency signal. The fourth radio frequency signal is obtained by performing radio frequency power amplification on the second intermediate-frequency analog signal. By implementing this embodiment of this application, because the sixth radio frequency signal processing module is connected to the second port of the at least one second switch circuit, when the second port of the at least one second switch circuit is in the connected state, the fourth radio frequency signal can be generated by using the sixth radio frequency signal processing module. In this implementation, the transmitting apparatus can transmit a low-frequency radio frequency signal by switching the second switch circuit.

According to a fifth aspect, an embodiment of this application provides a transceiver apparatus. The apparatus includes the receiving apparatus according to any one of the first aspect and the transmitting apparatus according to any one of the second aspect.

### BRIEF DESCRIPTION OF DRAWINGS

FIG. 1a is a schematic diagram of a structure of a receiving apparatus according to an embodiment of this application;
FIG. 1b is a schematic diagram of a structure of another receiving apparatus according to an embodiment of this application;
FIG. 1c is a schematic diagram of a structure of another receiving apparatus according to an embodiment of this application;
FIG. 1d is a schematic diagram of a structure of another receiving apparatus according to an embodiment of this application;
FIG. 1e is a schematic diagram of a structure of another receiving apparatus according to an embodiment of this application;
FIG. If is a schematic diagram of a hardware structure of a receiving apparatus according to an embodiment of this application;
FIG. 1g is a schematic flowchart of a signal processing method according to an embodiment of this application;
FIG. 2a is a schematic diagram of a structure of a transmitting apparatus according to an embodiment of this application;
FIG. 2b is a schematic diagram of a structure of another transmitting apparatus according to an embodiment of this application;
FIG. 2c is a schematic diagram of a structure of another transmitting apparatus according to an embodiment of this application;
FIG. 2d is a schematic diagram of a structure of another transmitting apparatus according to an embodiment of this application;
FIG. 2e is a schematic diagram of a structure of another transmitting apparatus according to an embodiment of this application;
FIG. 2f is a schematic diagram of a hardware structure of a transmitting apparatus according to an embodiment of this application;
FIG. 2g is a schematic flowchart of another signal processing method according to an embodiment of this application;
FIG. 3a is a schematic diagram of a structure of a transceiver apparatus according to an embodiment of this application; and
FIG. 3b-1 and FIG. 3b-2 are a schematic diagram of a hardware structure of a transceiver apparatus according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", and the like are intended to distinguish between different objects but do not indicate a particular order. In addition, the terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

The terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system and/or a distributed system, and/or across a network, for example, the Internet interacting with another system by using the signal).

To make the technical solutions described in this application more comprehensible, the following describes this application in detail with reference to the accompanying drawings.

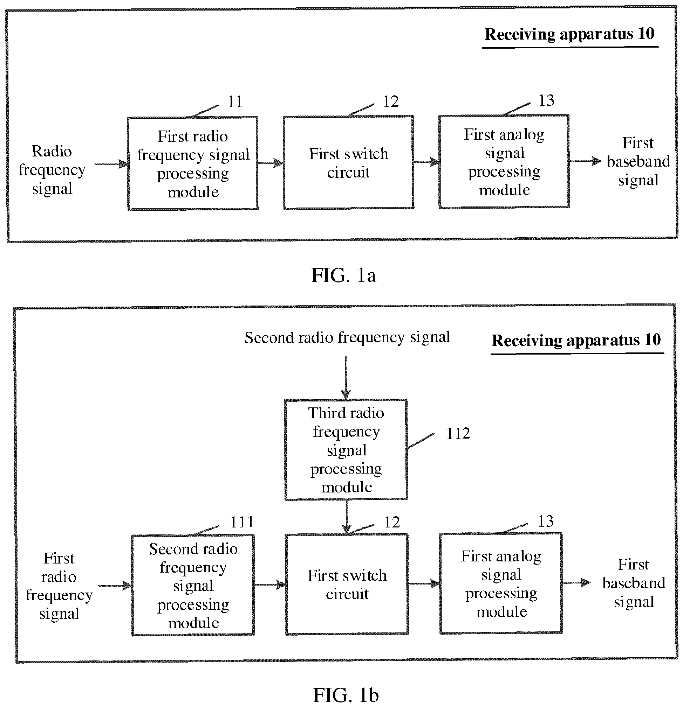

FIG. 1a is a schematic diagram of a structure of a receiving apparatus 10 according to an embodiment of this application. As shown in FIG. 1a, the apparatus 10 may include at least two first radio frequency signal processing modules 11, at least one first switch circuit 12, and a first analog signal processing module 13. The at least two first radio frequency signal processing modules 11 are connected to the first analog signal processing module 13 by using the at least one first switch circuit 12.

The first radio frequency signal processing module 11 is configured to obtain a radio frequency signal, to obtain a first analog signal.

The first analog signal processing module 13 is configured to obtain a first baseband signal based on the first analog signal.

In an example, as shown in FIG. 1b, the at least two first radio frequency signal processing modules 11 include a second radio frequency signal processing module 111 and a third radio frequency signal processing module 112. Specifically, the second radio frequency signal processing module 111 is connected to a first port of the at least one first switch circuit 12, and the third radio frequency signal processing module 112 is connected to a second port of the at least one first switch circuit 12. The second radio frequency signal processing module 111 is configured to obtain a first radio frequency signal. The third radio frequency signal processing module 112 is configured to obtain a second radio frequency signal. Herein, the first radio frequency signal and the second radio frequency signal fall within different frequency ranges. For example, the first radio frequency signal falls within a first range, and the second radio frequency signal falls within a second range. In an example, a range within which a value is greater than or equal to a first threshold is the first range, and a range within which a value is less than the first threshold is the second range. In an example, a value greater than a first threshold falls within the first range, and a value less than or equal to the first threshold falls within the second range.

In an example, the first threshold may be a specific value that is set before delivery of the receiving apparatus 10 described in this application. In an example, the first threshold may be an empirical value (for example, the empirical value may be set to a standard value by default in the field of radio frequency) obtained by a person skilled in the art through continuous experiments in an evolution process of 2G (the 2nd Generation), 3G (the 3rd Generation), 4G (the 4th Generation), or even 5G (the 5th Generation). For example, the first threshold may be 2.4 GHz. For another example, the first threshold may be 5.8 GHz. Further, in an actual application, the first threshold may be adjusted, and values of the first threshold may be different in different application scenarios.

It should be noted that, in this embodiment of this application, the at least two first radio frequency signal processing modules may include two first radio frequency signal processing modules (for example, the second radio frequency signal processing module and the third radio frequency signal processing module that are mentioned above), and may alternatively include three first radio frequency signal processing modules. For example, the three first radio frequency signal processing modules include a second radio frequency signal processing module and a third radio frequency signal processing module, and may further include another radio frequency signal processing module other than the second radio frequency signal processing module and the third radio frequency signal processing module. When the at least two first radio frequency signal processing modules include three or more radio frequency signal processing modules, in an example, the three or more radio frequency signal processing modules may receive three or more radio frequency signals within different frequency ranges. In an example, several (for example, two) of the three or more radio frequency signal processing modules may receive radio frequency signals within a same frequency range, another radio frequency signal processing module may receive a radio frequency signal within another frequency range, and the like. This is not more limited herein.

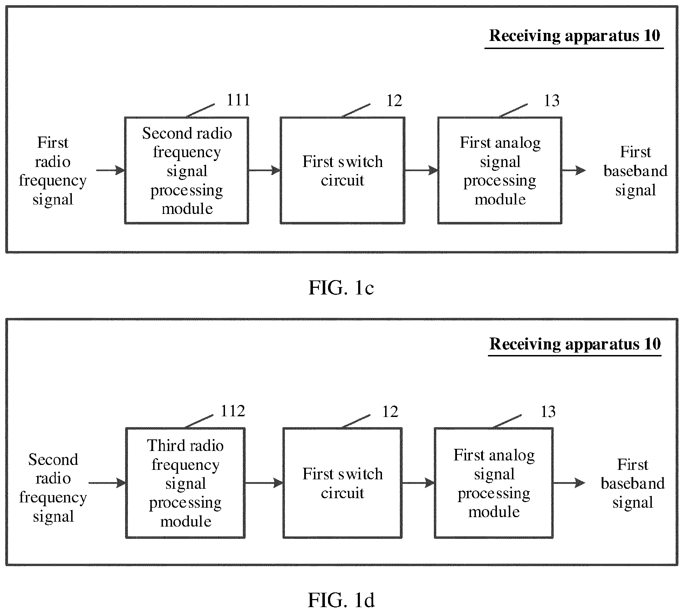

In an example, as shown in FIG. 1c, the receiving apparatus 10 may include a second radio frequency signal processing module 111, at least one first switch circuit 12, and a first analog signal processing module 13. When a first port of the at least one first switch circuit 12 is in a connected state, the receiving apparatus 10 may be configured to obtain a first baseband signal based on a first radio frequency signal. For example, the first radio frequency signal falls within a first range. Specifically, the second radio frequency signal processing module 111 is configured to obtain the first radio frequency signal and generate a first intermediate-frequency analog signal. The first intermediate-frequency analog signal is obtained by performing frequency mixing on the first radio frequency signal. The first analog signal processing module 13 is configured to generate the first baseband signal based on the first intermediate-frequency analog signal.

In an example, as shown in FIG. 1d, the receiving apparatus 10 may include a third radio frequency signal processing module 112, at least one first switch circuit 12, and a first analog signal processing module 13. When a second port of the at least one first switch circuit 12 is in a connected state, the receiving apparatus 10 may be configured to obtain a first baseband signal based on a second radio frequency signal. For example, the second radio frequency signal falls within a second range. Specifically, the third radio frequency signal processing module 112 is configured to obtain the second radio frequency signal and generate a first amplified analog signal. The first amplified analog signal is obtained by amplifying the second radio frequency signal. The first analog signal processing module 13 is configured to generate the first baseband signal based on the first amplified analog signal.

With reference to FIG. 1c and FIG. 1d, it may be learned that the receiving apparatus 10 can work within different frequency ranges by being switched by using the at least one first switch circuit. When the receiving apparatus 10 works within the different frequency ranges, the "first analog signal processing module" can be reused. This implementation can reduce complexity and costs of the receiving apparatus.

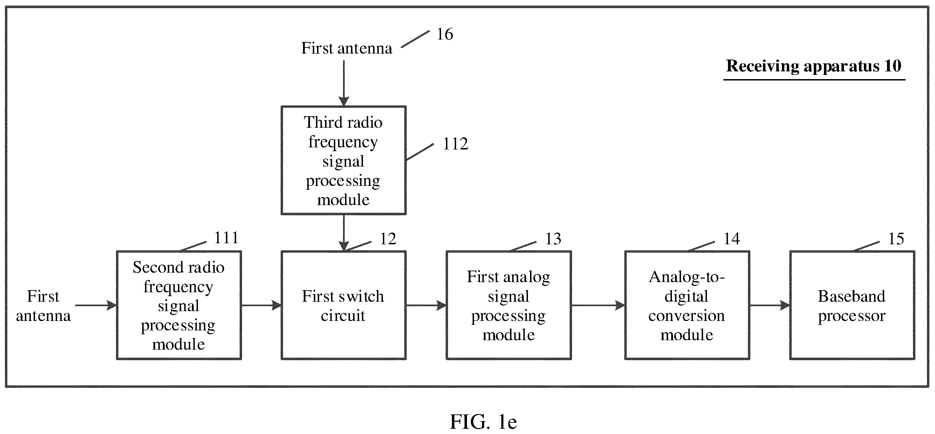

In an example, as shown in FIG. 1e, the receiving apparatus 10 may include at least two first radio frequency signal processing modules 11 (for example, the at least two first radio frequency signal processing modules may include a second radio frequency signal processing module 111 and a third radio frequency signal processing module 112), at least one first switch circuit 12 (where the first switch circuit includes a first port and a second port), a first analog signal processing module 13, an analog-to-digital conversion module 14, a baseband processor 15, and at least one first antenna 16. The at least one first antenna is connected to at least one of the second radio frequency signal processing module 111 or the third radio frequency signal processing module 112.

With reference to a schematic diagram of the structure of the receiving apparatus 10 shown in FIG. 1e, when the first port of the at least one first switch circuit 12 is in a connected state, the second radio frequency signal processing module 111 may be configured to obtain a first radio frequency signal and generate a first intermediate-frequency analog signal. The first intermediate-frequency analog signal is obtained by performing frequency mixing on the first radio frequency signal. In this case, the first analog signal processing module 13 may be configured to generate a first baseband signal based on the first intermediate-frequency analog signal. When the second port of the at least one first switch circuit 12 is in a connected state, the third radio frequency signal processing module 112 may be configured to obtain a second radio frequency signal and generate a first amplified analog signal. The first amplified analog signal is obtained by amplifying the second radio frequency signal. In this case, the first analog signal processing module 13 may be configured to generate the first baseband signal based on the first amplified analog signal.

The following describes specific working processes when the first switch circuit in the receiving apparatus 10 is in different connected states.

In an example, when the baseband processor 15 learns that the second radio frequency signal processing module obtains the first radio frequency signal from the first antenna (for example, the first antenna is a receive antenna), the baseband processor 15 sets the first port of the at least one first switch circuit to the connected state. In this case, the second radio frequency signal processing module 111 is configured to obtain the first radio frequency signal from the first antenna and generate the first intermediate-frequency analog signal. The first intermediate-frequency analog signal is obtained by performing frequency mixing on the first radio frequency signal. The first analog signal processing module 13 is configured to generate a first baseband analog signal based on the first intermediate-frequency analog signal. The analog-to-digital conversion module 14 is configured to generate a first digital baseband signal. The baseband processor 15 is configured to perform processing based on the first digital baseband signal. A first local oscillator signal processing module 17 is configured to generate a first local oscillator signal. A second local oscillator signal processing module 18 is configured to generate a second local oscillator signal.

In an example, when the baseband processor 15 learns that the third radio frequency signal processing module obtains the second radio frequency signal from the first antenna (for example, the first antenna is a receive antenna), the baseband processor 15 sets the second port of the at least one first switch circuit to the connected state. In this case, the third radio frequency signal processing module 112 is configured to obtain the second radio frequency signal from the first antenna and generate the first amplified analog signal. The first amplified analog signal is obtained by amplifying the second radio frequency signal. The first analog signal processing module 13 is configured to generate a first analog baseband signal based on the first amplified analog signal. The analog-to-digital conversion module 14 is configured to generate a first digital baseband signal. The baseband processor 15 is configured to perform processing based on the first digital baseband signal. A first local oscillator signal processing module 17 is configured to generate a first local oscillator signal. A second local oscillator signal processing module 18 is configured to generate a second local oscillator signal.

In an example, a specific structure of the receiving apparatus 10 may be shown in FIG. If.

A second radio frequency signal processing module 111 may include a first low noise amplifier (Low Noise Amplifier, LNA) and a first down-conversion mixer. In an actual application, in addition to the first low noise amplifier and the first down-conversion mixer, the second radio frequency signal processing module 111 may further include a first bypass circuit.

A third radio frequency signal processing module 112 may include a second low noise amplifier. In an actual application, in addition to the second low noise amplifier, the third radio frequency signal processing module 112 may further include a second bypass circuit.

Specifically, the bypass circuit is distinguished from a main circuit (for example, the main circuit is a circuit including by the second low noise amplifier), and means that, when a function is required, the bypass circuit may be switched to another circuit without affecting normal working of the radio frequency signal processing module.

A first analog signal processing module 13 may include a first amplifier (Amplifier) and at least two first quadrature I/Q processing circuits. A first I-channel processing circuit includes a second down-conversion mixer, a first variable-gain amplifier, a first low-pass filter (Low Pass Filter, LPF), and a second amplifier. A first Q-channel processing circuit includes a third down-conversion mixer, a second variable-gain amplifier, a second low-pass filter, and a third amplifier. In an example, the first amplifier and the at least two first quadrature I/Q processing circuits may be of an independent structure. In an example, the first amplifier and the at least two first quadrature I/Q processing circuits may be encapsulated together. This is not specifically limited in this application.

An analog-to-digital conversion module 14 may include at least two analog-to-digital converters. For example, the at least two analog-to-digital converters may include a first analog-to-digital converter and a second analog-to-digital converter. The first analog-to-digital converter is connected to the first I-channel processing circuit, and the second analog-to-digital converter is connected to the first Q-channel processing circuit.

A first local oscillator signal processing module 17 may include a first phase-locked loop PLL 1 (Phase Locked Loop, PLL) and a first high-frequency oscillator.

A second local oscillator signal processing module 18 may include a second phase-locked loop PLL 2 and a second high-frequency oscillator.

In this embodiment of this application, a main function of the phase-locked loop is to lock a high-frequency oscillator to a low-frequency and stable low-frequency clock source, to enable stability of a high-frequency oscillation source tends to be consistent with stability of the low-frequency clock source. A working principle of the phase-locked loop is as follows: A signal generated by the high-frequency oscillation source is processed through frequency dividing to obtain a signal whose frequency is the same as that of a reference clock source, the signal is compared with a frequency/phase of a reference clock signal, and a comparison result is used as an error control signal to control a frequency/phase of the high-frequency oscillator. Through such feedback control, oscillation of the high-frequency oscillator tends to be stable, to output a stable high-frequency signal. Signals obtained by separately performing frequency tripling and frequency halving on the signal generated by the phase-locked loop are used as first-stage and second-stage local oscillator signals.

In this embodiment of this application, the low noise amplifier is an amplifier with a very small noise coefficient. Specifically, the low noise amplifier may be configured to amplify a received radio frequency signal.

In this embodiment of this application, the first low noise amplifier and the second low noise amplifier may be amplifiers of a same structure and type. The first low noise amplifier works within a first range, and the second low noise amplifier works within a second range. Herein, the first range and the second range belong to different frequency ranges.

In an example, the second radio frequency signal processing module 111 may include the first down-conversion mixer. The third radio frequency signal processing module 112 may include the bypass circuit (for example, the bypass circuit is configured to receive a second radio frequency signal). The first analog signal processing module 13 may include the first amplifier (Amplifier) and the at least two first quadrature I/Q processing circuits. The first I-channel processing circuit includes the second down-conversion mixer, the first variable-gain amplifier, the first low-pass filter (Low Pass Filter, LPF), and the second amplifier. The first Q-channel processing circuit includes the third down-conversion mixer, the second variable-gain amplifier, the second low-pass filter, and the third amplifier. The analog-to-digital conversion module 14 may include the at least two analog-to-digital converters. The first local oscillator signal processing module 17 may include the first phase-locked loop PLL 1 (Phase Locked Loop, PLL) and the first high-frequency oscillator. The second local oscillator signal processing module 18 may include the second phase-locked loop PLL 2 and the second high-frequency oscillator. In this implementation, the receiving apparatus 10 may be configured to receive a radio frequency signal whose signal-to-noise ratio meets a specified threshold (for example, the radio frequency signal may be a first radio frequency signal or a second radio frequency signal). Herein, the signal-to-noise ratio (signal-to-noise ratio) is a parameter that describes a proportional relationship between a valid component and a noise component in a signal. Usually, a higher signal-to-noise ratio indicates lower noise. For example, the specified threshold may be 90 dB. It may be understood that, when the signal-to-noise ratio of the radio frequency signal input to the receiving apparatus 10 is 95 dB, the receiving apparatus 10 may complete receiving the radio frequency signal.

Based on a schematic diagram of the hardware structure of the transceiver apparatus 10 shown in FIG. If, the following specifically describes how the receiving apparatus 10 processes a radio frequency signal. In an example, when a first port of at least one first switch circuit 12 is in a connected state, the second radio frequency signal processing module 111 obtains a first radio frequency signal (for example, the first radio frequency signal falls within a first range) from a receive antenna 16, performs frequency mixing on the obtained first radio frequency signal and a first local oscillator signal, to obtain a first intermediate-frequency analog signal, and then sends the first intermediate-frequency analog signal to the first analog signal processing module 13 to perform orthogonal frequency mixing with a second local oscillator signal, to generate two channels of orthogonal first analog baseband signals. Then, the two channels of orthogonal first analog baseband signals are sent to the analog-to-digital conversion module 14, to obtain two channels of orthogonal first digital baseband signals, so that a baseband processor 15 can process the two channels of orthogonal first digital baseband signals.

Specifically, in the foregoing descriptions, the "performing frequency mixing on the obtained first radio frequency signal and a first local oscillator signal, to obtain a first intermediate-frequency analog signal" may mean that an absolute value is taken after the obtained first radio frequency signal is subtracted from the first local oscillator signal, to obtain the first intermediate-frequency analog signal. The "sending the first intermediate-frequency analog signal to the first analog signal processing module 13 to perform orthogonal frequency mixing with a second local oscillator signal, to generate two channels of orthogonal first analog baseband signals" may mean that an absolute value is taken after the first intermediate-frequency analog signal is subtracted from the second local oscillator signal, to obtain the two channels of orthogonal first analog baseband signals. It may be understood that, when the first port of the at least one first switch circuit 12 is in the connected state, the receiving apparatus 10 can receive the first radio frequency signal by using a "two-time frequency conversion" structure (a down-conversion process). Herein, the first radio frequency signal falls within the first range. For example, the first radio frequency signal is a high-frequency signal.

In an example, when a second port of at least one first switch circuit 12 is in a connected state, the third radio frequency signal processing module 112 obtains a second radio frequency signal (for example, the second radio frequency signal falls within a second range) from a receive antenna 16, amplifies the obtained second radio frequency signal to obtain a first amplified analog signal, and then sends the first amplified analog signal to the first analog signal processing module 13 to perform orthogonal frequency mixing with a second local oscillator signal, to generate two channels of orthogonal first analog baseband signals. Then, the two channels of orthogonal first analog baseband signals are sent to the analog-to-digital conversion module 14, to obtain two channels of orthogonal first digital baseband signals, so that the baseband processor 15 can process the two channels of orthogonal first digital baseband signals.

Specifically, in the foregoing descriptions, the "sends the first amplified analog signal to the first analog signal processing module 13 to perform orthogonal frequency mixing with a second local oscillator signal, to generate two channels of orthogonal first analog baseband signals" may mean that an absolute value is taken after the first amplified analog signal is subtracted from the second local oscillator signal, to obtain the two channels of orthogonal first analog baseband signals. It may be understood that, when the second port of the at least one first switch circuit 12 is in the connected state, the receiving apparatus 10 can receive the second radio frequency signal by using a "one-time frequency conversion" structure (namely, a zero-intermediate-frequency structure).

By implementing this embodiment of this application, because the receiving apparatus uses a reused structure, the second radio frequency signal processing module and the third radio frequency signal processing module can process radio frequency signals within different frequency ranges by being switched by using the first switch circuit, to reduce complexity and costs of the receiving apparatus.

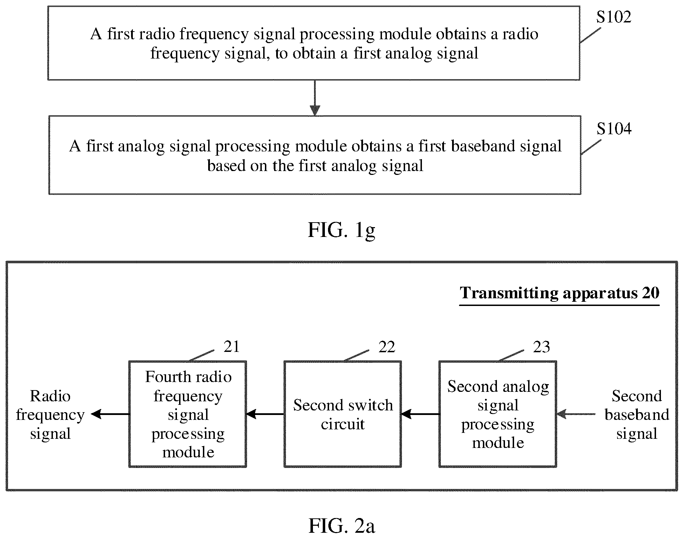

The receiving apparatus shown in FIG. 1a is used as an example. This application provides a signal processing method. The method is applied to the receiving apparatus. As shown in FIG. 1g, the method may include but is not limited to the following steps.

Step S102: The first radio frequency signal processing module obtains a radio frequency signal, to obtain a first analog signal.

Step S104: The first analog signal processing module obtains a first baseband signal based on the first analog signal.

By implementing this embodiment of this application, the receiving apparatus is switched by using the first switch circuit, and the at least two first radio frequency signal processing modules can process radio frequency signals within different frequency ranges, to reduce complexity and costs of the receiving apparatus.

In a possible implementation, the at least two radio frequency signal processing modules include a second radio frequency signal processing module. The second radio frequency signal processing module is connected to a first port of the at least one first switch circuit. The first port of the at least one first switch circuit is in a connected state. In this case, an implementation process of the signal processing method may include: The second radio frequency signal processing module obtains a first radio frequency signal and generates a first intermediate-frequency analog signal. The first intermediate-frequency analog signal is obtained by performing frequency mixing on the first radio frequency signal. Then, the first analog signal processing module generates the first baseband signal based on the first intermediate-frequency analog signal. By implementing this embodiment of this application, because the second radio frequency signal processing module is connected to the first port of the at least one first switch circuit, when the first port of the at least one first switch circuit is in the connected state, the first radio frequency signal can be processed by using the second radio frequency signal processing module, and the first baseband signal is generated by using the first analog signal processing module. In this implementation, the receiving apparatus can process a high-frequency radio frequency signal by switching the first switch circuit.

In a possible implementation, the at least two radio frequency signal processing modules include a third radio frequency signal processing module, and the third radio frequency signal processing module is connected to a second port of the at least one first switch circuit. The second port of the at least one first switch circuit is in a connected state. In this case, an implementation process of the signal processing method may include: The third radio frequency signal processing module obtains a second radio frequency signal and generates a first amplified analog signal. The first amplified analog signal is obtained by amplifying the second radio frequency signal. Then, the first analog signal processing module generates the first baseband signal based on the first amplified analog signal. By implementing this embodiment of this application, because the third radio frequency signal processing module is connected to the second port of the at least one first switch circuit, when the second port of the at least one first switch circuit is in the connected state, the second radio frequency signal can be processed by using the third radio frequency signal processing module, and the first baseband signal is generated by using the first analog signal processing module. In this implementation, the receiving apparatus can process a low-frequency radio frequency signal by switching the first switch circuit.

FIG. 2a is a schematic diagram of a structure of a transmitting apparatus 20 according to an embodiment of this application. As shown in FIG. 2a, the apparatus 20 may include at least two fourth radio frequency signal processing modules 21, at least one second switch circuit 22, and a second analog signal processing module 23. The at least two fourth radio frequency signal processing modules 21 are connected to the second analog signal processing module 23 by using the at least one second switch circuit 22.

The second analog signal processing module 23 is configured to obtain a second analog signal based on a second baseband signal.

The fourth radio frequency signal processing module 24 is configured to obtain a radio frequency signal based on the second analog signal.

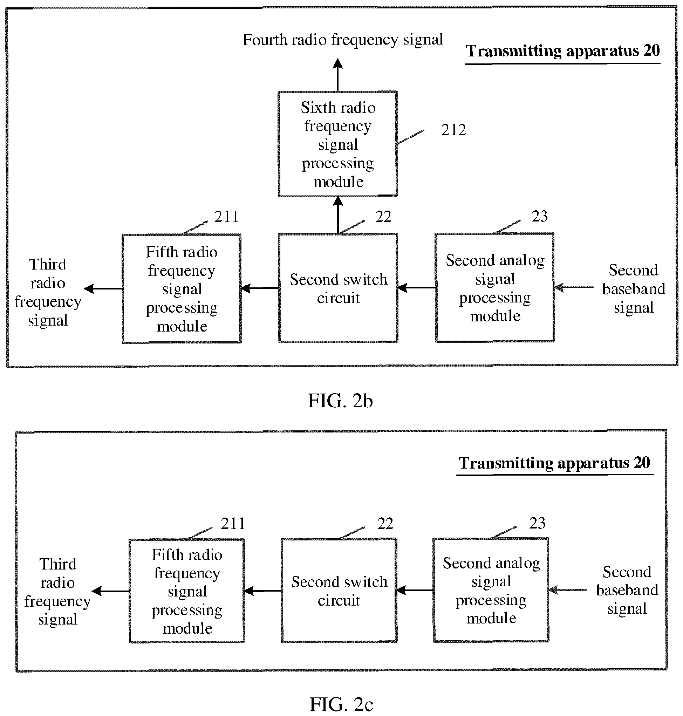

In an example, as shown in FIG. 2b, the at least two fourth radio frequency signal processing modules 21 include a fifth radio frequency signal processing module and a sixth radio frequency signal processing module. Specifically, the fifth radio frequency signal processing module 211 is connected to a first port of the at least one second switch circuit 22, and the sixth radio frequency signal processing module 212 is connected to a second port of the at least one second switch circuit 22. The fifth radio frequency signal processing module 211 is configured to generate a third radio frequency signal, and the sixth radio frequency signal processing module is configured to generate a fourth radio frequency signal. Herein, the third radio frequency signal and the fourth radio frequency signal fall within different frequency ranges. For example, the third radio frequency signal falls within a first range, and the fourth radio frequency signal falls within a second range. In an example, a range within which a value is greater than or equal to a first threshold is the first range, and a range within which a value is less than the first threshold is the second range. In an example, a range within which a value is greater than a first threshold is the first range, and a range within which a value is less than or equal to the first threshold is the second range.

In an example, the first threshold may be a specific value that is set before delivery of the transmitting apparatus 20 described in this application. In an example, the first threshold may be an empirical value (for example, the empirical value may be set to a standard value by default in the field of radio frequency) obtained by a person skilled in the art through continuous experiments in an evolution process of 2G (the 2nd Generation), 3G (the 3rd Generation), 4G (the 4th Generation), or even 5G (the 5th Generation). For example, the first threshold may be 2.4 GHz. For another example, the first threshold may be 5.8 GHz. Further, in an actual application, the first threshold may be adjusted, and values of the first threshold may be different in different application scenarios.

It should be noted that, in this embodiment of this application, the at least two fourth radio frequency signal processing modules may include two fourth radio frequency signal processing modules (for example, the fifth radio frequency signal processing module and the sixth radio frequency signal processing module that are mentioned above), and may alternatively include three fourth radio frequency signal processing modules. For example, the three fourth radio frequency signal processing modules include a fifth radio frequency signal processing module and a sixth radio frequency signal processing module, and may further include another radio frequency signal processing module other than the fifth radio frequency signal processing module and the sixth radio frequency signal processing module. When the at least two fourth radio frequency signal processing modules include three or more radio frequency signal processing modules, in an example, the three or more radio frequency signal processing modules may transmit three or more radio frequency signals within different frequency ranges. In an example, several (for example, two) of the three or more radio frequency signal processing modules may transmit radio frequency signals within a same frequency range, another radio frequency signal processing module may transmit a radio frequency signal within another frequency range, and the like. This is not more limited herein.

In an example, as shown in FIG. 2c, the transmitting apparatus 20 may include a second analog signal processing module 23, at least one second switch circuit 22, and a fifth radio frequency signal processing module 211. When a first port of the at least one second switch circuit is in a connected state, the transmitting apparatus 20 may be configured to obtain a third radio frequency signal based on a second baseband signal. For example, the third radio frequency signal falls within a first range. Specifically, the second analog signal processing module 23 is configured to generate a second intermediate-frequency analog signal based on the second baseband signal. The fifth radio frequency signal processing module 211 is configured to obtain the second intermediate-frequency analog signal and generate the third radio frequency signal. The third radio frequency signal is obtained by performing frequency mixing on the second intermediate-frequency analog signal.

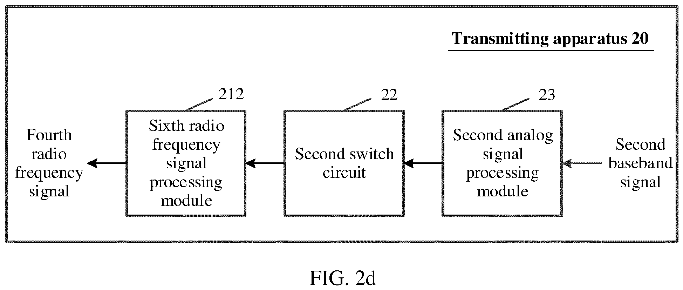

In an example, as shown in FIG. 2d, the transmitting apparatus 20 may include a second analog signal processing module 23, at least one second switch circuit 22, and a sixth radio frequency signal processing module 212. When a second port of the at least one second switch circuit is in a connected state, the transmitting apparatus 20 may be configured to obtain a fourth radio frequency signal based on a second baseband signal. For example, the fourth radio frequency signal falls within a second frequency range. Specifically, the second analog signal processing module 23 is configured to generate a second intermediate-frequency analog signal based on the second baseband signal. The sixth radio frequency signal processing module is configured to obtain the second intermediate-frequency analog signal and generate the fourth radio frequency signal. The fourth radio frequency signal is obtained by performing radio frequency power amplification on the second intermediate-frequency analog signal.

With reference to FIG. 2c and FIG. 2d, it may be learned that the transmitting apparatus 20 can transmit radio frequency signals within different frequency ranges by being switched by using the at least one second switch circuit. When the transmitting apparatus 20 transmits radio frequency signals within different frequency ranges, the "second analog signal processing module" can be reused. This implementation can reduce complexity and costs of the transmitting apparatus.

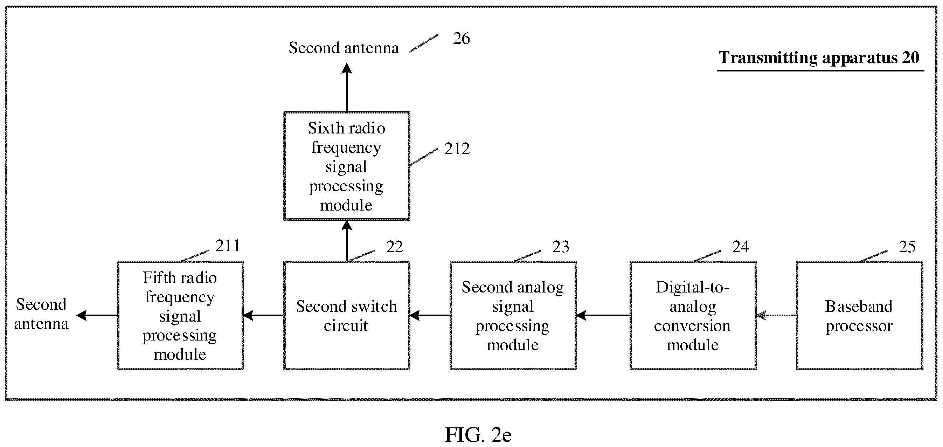

In an example, as shown in FIG. 2e, the transmitting apparatus 20 may include at least two fourth radio frequency signal processing modules 21 (for example, the at least two fourth radio frequency signal processing modules 21 may include a fifth radio frequency signal processing module 211 and a sixth radio frequency signal processing module 212), at least one second switch circuit 22 (where the second switch circuit may include a first port and a second port), a second analog signal processing module 23, a digital-to-analog conversion module 24, a baseband processor 25, and at least one second antenna 26. The at least one second antenna 26 is connected to at least one of the fifth radio frequency signal processing module 211 or the sixth radio frequency signal processing module 212.

With reference to a schematic diagram of the structure of the transmitting apparatus 20 shown in FIG. 2e, when the first port of the at least one second switch circuit is in a connected state, the second analog signal processing module 23 may be configured to generate a second intermediate-frequency analog signal based on a second baseband signal. In this case, the fifth radio frequency signal processing module 211 may be configured to obtain the second intermediate-frequency analog signal and generate a third radio frequency signal. The third radio frequency signal is obtained by performing frequency mixing on the second intermediate-frequency analog signal. When the second port of the at least one second switch circuit is in a connected state, the second analog signal processing module 23 may be configured to generate a second intermediate-frequency analog signal based on a second baseband signal. In this case, the sixth radio frequency signal processing module may be configured to obtain the second intermediate-frequency analog signal and generate a fourth radio frequency signal. The fourth radio frequency signal is obtained by performing radio frequency power amplification on the second intermediate-frequency analog signal.

The following describes specific working processes when the second switch circuit in the transmitting apparatus 20 is in different connected states.

In an example, when the baseband processor 25 controls transmission of the third radio frequency signal, the baseband processor 25 sets the first port of the at least one second switch circuit to the connected state. In this case, the baseband processor 25 is configured to generate a second digital baseband signal. The digital-to-analog conversion module 24 is configured to generate a second analog baseband signal. The second analog signal processing module 23 is configured to generate the second intermediate-frequency analog signal based on the second analog baseband signal. The fifth radio frequency signal processing module 211 is configured to obtain the second intermediate-frequency analog signal and generate the third radio frequency signal. The third radio frequency signal is obtained by performing frequency mixing on the second intermediate-frequency analog signal. A first local oscillator signal processing module 17 is configured to generate a first local oscillator signal. A second local oscillator signal processing module 18 is configured to generate a second local oscillator signal.

In an example, when the baseband processor 25 controls transmission of the third radio frequency signal, the baseband processor 25 enables the second port of the at least one second switch circuit to be in the connected state. In this case, the baseband processor 25 is configured to generate a second digital baseband signal. The digital-to-analog conversion module 24 is configured to generate a second analog baseband signal. The second analog signal processing module 23 is configured to generate the second intermediate-frequency analog signal based on the second analog baseband signal. The sixth radio frequency signal processing module 212 is configured to obtain the second intermediate-frequency analog signal and generate the fourth radio frequency signal. The fourth radio frequency signal is obtained by performing radio frequency power amplification on the second intermediate-frequency analog signal. A first local oscillator signal processing module 17 is configured to generate a first local oscillator signal. A second local oscillator signal processing module 18 is configured to generate a second local oscillator signal.

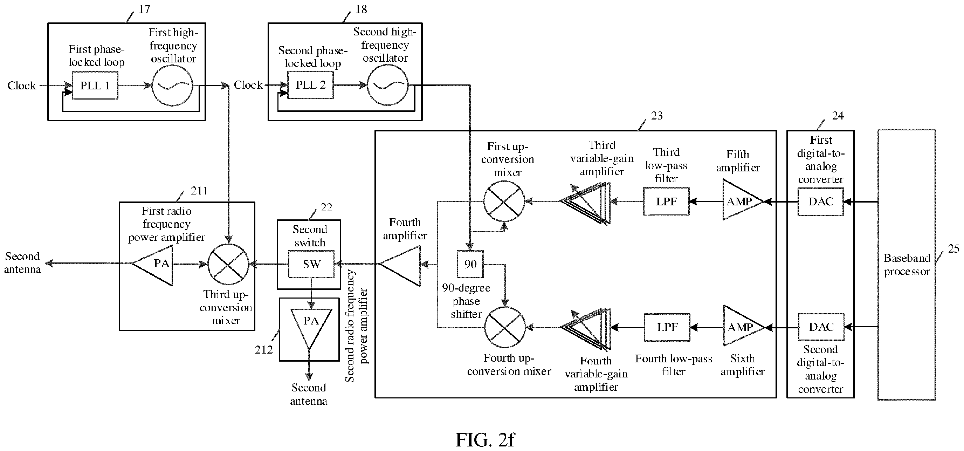

In an example, a hardware structure of the transmitting apparatus 20 may be shown in FIG. 2f.

A second analog signal processing module 23 includes at least two second quadrature I/Q processing circuits and a fourth amplifier. A second I-channel processing circuit includes a first up-conversion mixer, a third variable-gain amplifier, a third low-pass filter, and a fifth amplifier. A second Q-channel processing circuit includes a second up-conversion mixer, a fourth variable-gain amplifier, a fourth low-pass filter, and a sixth amplifier. In an example, the fourth amplifier and the at least two second quadrature I/Q processing circuits may be of an independent structure. In an example, the fourth amplifier and the at least two second quadrature I/Q processing circuits may be encapsulated together. This is not specifically limited in this application.

A fifth radio frequency signal processing module 211 includes a first radio frequency power amplifier (Power Amplifier, PA) and a third up-conversion mixer. In an actual application, in addition to the first radio frequency power amplifier (Power Amplifier, PA) and the third up-conversion mixer, the fifth radio frequency signal processing module 211 may further include a third bypass circuit.

A sixth radio frequency signal processing module 212 includes a second radio frequency power amplifier. In an actual application, in addition to the second radio frequency power amplifier, the sixth radio frequency signal processing module 212 may further include a fourth bypass circuit.

Specifically, the bypass circuit is distinguished from a main circuit (for example, the main circuit is a circuit including the second radio frequency power amplifier), and means that, when a function is required, the bypass circuit may be switched to another circuit without affecting normal working of the radio frequency signal processing module.

A digital-to-analog conversion module 24 may include at least two digital-to-analog converters. For example, the at least two digital-to-analog converters may include a first digital-to-analog converter and a second digital-to-analog converter. The first digital-to-analog converter is connected to the second I-channel processing circuit, and the second digital-to-analog converter is connected to the second Q-channel processing circuit.

For specific implementations of a first local oscillator signal processing module 17 and a second local oscillator signal processing module 18, refer to the foregoing descriptions. Details are not described herein again.

In this embodiment of this application, the first radio frequency power amplifier and the second radio frequency power amplifier may be amplifiers of a same structure and type. The first radio frequency power amplifier works within a first range, and the second radio frequency power amplifier works within a second range. Herein, the first range and the second range belong to different frequency ranges.

In an example, the second analog signal processing module 23 includes at least two second quadrature I/Q processing circuits and a fourth amplifier. The fifth radio frequency signal processing module 211 includes a third up-conversion mixer. The sixth radio frequency signal processing module 212 includes a bypass circuit. The digital-to-analog conversion module 24 may include at least two digital-to-analog converters. The first local oscillator signal processing module 17 may include a first phase-locked loop PLL 1 (Phase-Locked Loop, PLL) and a first high-frequency oscillator. The second local oscillator signal processing module 18 may include a second phase-locked loop PLL2 and a second high-frequency oscillator. In this implementation, the transmitting apparatus 20 can be configured to transmit a radio frequency signal whose output power and/or efficiency meets a specified threshold (for example, the radio frequency signal may be a third radio frequency signal or a fourth radio frequency signal).

Based on a schematic diagram of the specific structure of the transmitting apparatus 20 shown in FIG. 2f, the following specifically describes how the transmitting apparatus 20 transmits a radio frequency signal. In an example, when a first port of at least one second switch circuit is in a connected state, a baseband processor 25 generates a second digital baseband signal, and then sends the second digital baseband signal to the digital-to-analog conversion module 24, to obtain two channels of orthogonal second analog baseband signals. Then, the two channels of orthogonal second analog baseband signals are processed by the second analog signal processing module 23, to obtain a second intermediate-frequency analog signal. The fifth radio frequency signal processing module 211 obtains the second intermediate-frequency analog signal, and performs frequency mixing on the second intermediate-frequency analog signal and a first local oscillator signal, to obtain a third radio frequency signal. Then, the third radio frequency signal is transmitted through a second antenna (for example, the second antenna may be a transmit antenna).

Specifically, in the foregoing descriptions, that "the two channels of orthogonal second analog baseband signals are processed by the second analog signal processing module 23, to obtain a second intermediate-frequency analog signal" means that the two channels of orthogonal second analog baseband signals and a second local oscillator signal are added, to obtain the second intermediate-frequency analog signal. The "performing frequency mixing on the second intermediate-frequency analog signal and a first local oscillator signal, to obtain a third radio frequency signal" means that the second intermediate-frequency analog signal and the first local oscillator signal are added, to obtain the third radio frequency signal. It may be understood that, when the first port of the at least one second switch circuit is in the connected state, the transmitting apparatus 20 can transmit the third radio frequency signal by using a "two-time frequency conversion" structure (an up-conversion process). Herein, the third radio frequency signal falls within a first range. For example, the third radio frequency signal is a high-frequency signal.

In an example, when a second port of at least one second switch circuit is in a connected state, a baseband processor 25 generates a second digital baseband signal, and then sends the second digital baseband signal to the digital-to-analog conversion module 24, to obtain two channels of orthogonal second analog baseband signals. Then, the two channels of orthogonal second analog baseband signals are processed by the second analog signal processing module 23, to obtain a second intermediate-frequency analog signal. The sixth radio frequency signal processing module 212 obtains the second intermediate-frequency analog signal, and performs radio frequency power amplification on the second intermediate-frequency analog signal, to obtain a fourth radio frequency signal. Then, the fourth radio frequency signal is transmitted through a second antenna (for example, the second antenna may be a transmit antenna).

Specifically, in the foregoing descriptions, that "the two channels of orthogonal second analog baseband signals are processed by the second analog signal processing module 23, to obtain a second intermediate-frequency analog signal" means that the two channels of orthogonal second analog baseband signals and a second local oscillator signal are added, to obtain the second intermediate-frequency analog signal. It may be understood that the transmitting apparatus 20 can transmit the fourth radio frequency signal by using a "one-time frequency conversion" structure (namely, a zero-intermediate-frequency structure).

By implementing this embodiment of this application, the transmitting apparatus is switched by using the second switch circuit, and the at least two fourth radio frequency signal processing modules can generate radio frequency signals within different frequency ranges, to reduce complexity and costs of the transmitting apparatus.

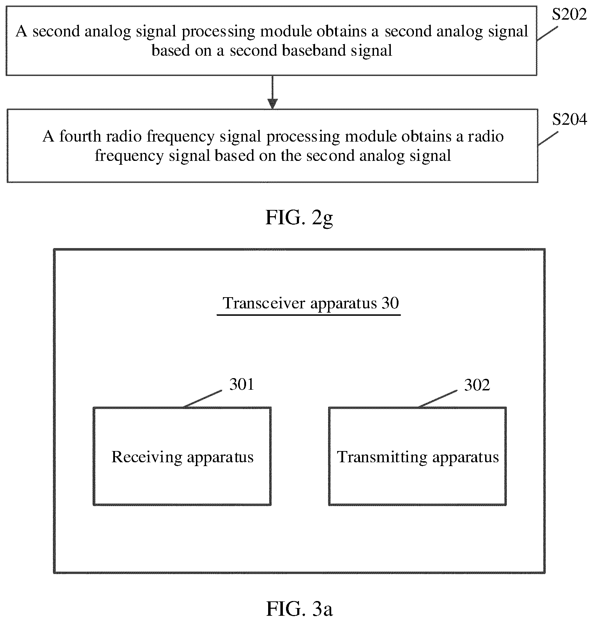

The transmitting apparatus shown in FIG. 2a is used as an example. This application provides a signal processing method. The method is applied to the transmitting apparatus. As shown in FIG. 2g, the method may include but is not limited to the following steps.

Step S202: The second analog signal processing module obtains a second analog signal based on a second baseband signal.

Step S204: The fourth radio frequency signal processing module obtains a radio frequency signal based on the second analog signal.

By implementing this embodiment of this application, the transmitting apparatus is switched by using the second switch circuit, and the at least two fourth radio frequency signal processing modules can generate radio frequency signals within different frequency ranges, to reduce complexity and costs of the transmitting apparatus.

In a possible implementation, the at least two fourth radio frequency signal processing modules include a fifth radio frequency signal processing module, and the fifth radio frequency signal processing module is connected to a first port of at least one second switch circuit. The first port of the at least one second switch circuit is in a connected state. In this case, an implementation process of the signal processing method may include: The second analog signal processing module generates a second intermediate-frequency analog signal based on the second baseband signal. Then the fifth radio frequency signal processing module obtains the second intermediate-frequency analog signal and generates a third radio frequency signal. The third radio frequency signal is obtained by performing frequency mixing on the second intermediate-frequency analog signal. By implementing this embodiment of this application, because the fifth radio frequency signal processing module is connected to the first port of the at least one second switch circuit, when the first port of the at least one second switch circuit is in the connected state, the third radio frequency signal can be generated by using the fifth radio frequency signal processing module. In this implementation, the transmitting apparatus can transmit a high-frequency radio frequency signal by switching the second switch circuit.

In a possible implementation, the at least two fourth radio frequency signal processing modules include a sixth radio frequency signal processing module, and the sixth radio frequency signal processing module is connected to a second port of at least one second switch circuit. The second port of the at least one second switch circuit is in a connected state. In this case, an implementation process of the signal processing method may include: The second analog signal processing module generates a second intermediate-frequency analog signal based on the second baseband signal. Then the sixth radio frequency signal processing module obtains the second intermediate-frequency analog signal and generates a fourth radio frequency signal. The fourth radio frequency signal is obtained by performing radio frequency power amplification on the second intermediate-frequency analog signal. By implementing this embodiment of this application, because the sixth radio frequency signal processing module is connected to the second port of the at least one second switch circuit, when the second port of the at least one second switch circuit is in the connected state, the fourth radio frequency signal can be generated by using the sixth radio frequency signal processing module. In this implementation, the transmitting apparatus can transmit a low-frequency radio frequency signal by switching the second switch circuit.

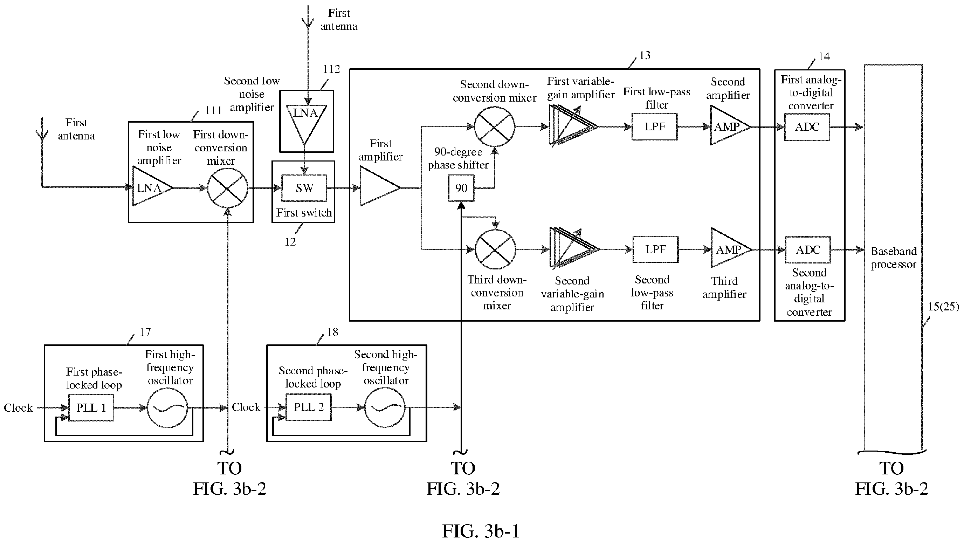

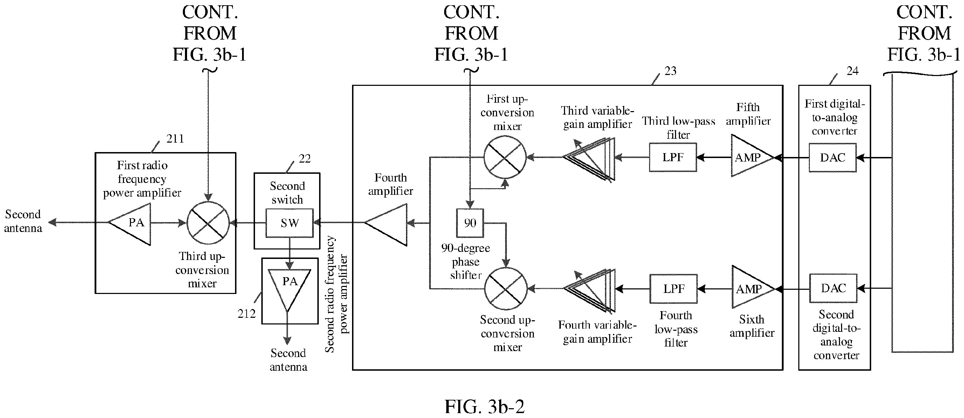

FIG. 3a is a schematic diagram of a structure of a transceiver apparatus according to an embodiment of this application. As shown in FIG. 3a, the transceiver apparatus includes a receiving apparatus 301 and a transmitting apparatus 302. For specific implementation of the receiving apparatus 301, refer to the descriptions of the foregoing receiving apparatus 10. For specific implementation of the transmitting apparatus 302, refer to the descriptions of the foregoing transmitting apparatus 20. Details are not described herein again.

In this embodiment of this application, the receiving apparatus 301 and the transmitting apparatus 302 can receive and transmit a radio frequency signal by using a wireless network. A specific implementation may be any manner well known by a person skilled in the art.

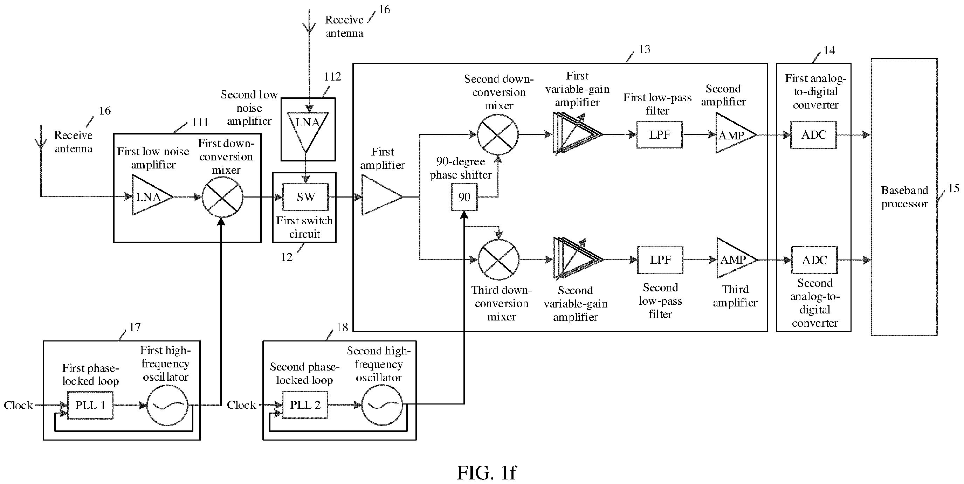

It may be understood that the receiving apparatus 301 and the transmitting apparatus 302 can be integrated into a same radio frequency circuit. As shown in FIG. 3b-1 and FIG. 3b-2, the transceiver apparatus 30 includes the receiving apparatus 10 shown in FIG. 1f and the transmitting apparatus 20 shown in FIG. 2f. For specific implementation of the receiving apparatus 10 and the transmitting apparatus 20, refer to the foregoing descriptions. Details are not described herein again.

To facilitate better understanding of this application, the following describes several application scenarios to which the technical solutions described in this application are applicable.

### Scenario 1: extended frequency support. The transceiver apparatus 30 can support a communication frequency band from 3 GHz to 5.8 GHz.

In the conventional technology, a 4G transceiver apparatus (for example, a transceiver) product in a base station is used as an example. Working frequencies of the 4G transceiver apparatus product are distributed in a communication frequency band less than 3 GHz (that is, a communication frequency band greater than 3 GHz is not supported). Subsequently, an LAA (License Assisted Access) technology is introduced. Based on carrier aggregation or dual connectivity, a licensed carrier assists access of an unlicensed carrier, to supplement data service bearing of an LTE network, that is, an unlicensed (unlicensed) frequency band of 5.8 GHz is used to assist communication in an existing 4G frequency band, to expand communication bandwidth.

The transceiver apparatus (which includes the receiving apparatus 10 and the transmitting apparatus 20) described in this application can support the communication frequency band from 3 GHz to 5.8 GHz. In an example, an example in which the receiving apparatus 10 receives a first radio frequency signal whose communication frequency is 5.8 GHz is used. When a first port of at least one first switch circuit is in a connected state, a second radio frequency signal processing module obtains the first radio frequency signal whose communication frequency is 5.8 GHz from a first antenna, and performs frequency mixing on the first radio frequency signal and a first local oscillator signal, to obtain a first intermediate-frequency analog signal. Then, the first intermediate-frequency analog signal is sent to a first analog signal processing module to perform orthogonal frequency mixing with a second local oscillator signal, to generate two channels of orthogonal first baseband signals (for example, first analog baseband signals), so that the first radio frequency signal whose communication frequency is 5.8 GHz can be received.

In an example, an example in which the receiving apparatus 10 receives a second radio frequency signal whose communication frequency is less than or equal to 3 GHz is used. When a second port of at least one first switch circuit is in a connected state, a third radio frequency signal processing module obtains the second radio frequency signal whose communication frequency is less than or equal to 3 GHz from a first antenna, and amplifies the obtained second radio frequency signal, to obtain a first amplified analog signal. Then, the first amplified analog signal is sent to a first analog signal processing module to perform orthogonal frequency mixing with a second local oscillator signal, to generate two channels of orthogonal first baseband signals (for example, first analog baseband signals), so that the second radio frequency signal whose communication frequency is less than or equal to 3 GHz can be received.

In an example, an example in which the transmitting apparatus 20 transmits a third radio frequency signal whose communication frequency is 5.8 GHz is used. When a first port of at least one second switch circuit is in a connected state, two channels of orthogonal second baseband signals (for example, second analog baseband signals) are processed by a second analog signal processing module, to obtain a second intermediate-frequency analog signal. A fifth radio frequency signal processing module obtains the second intermediate-frequency analog signal, and performs frequency mixing on the second intermediate-frequency analog signal and a first local oscillator signal, to obtain the third radio frequency signal whose communication frequency is 5.8 GHz. Then, the third radio frequency signal is transmitted through a second antenna, so that the third radio frequency signal whose communication frequency is 5.8 GHz can be transmitted.

In an example, an example in which the transmitting apparatus 20 transmits a fourth radio frequency signal whose communication frequency is less than or equal to 3 GHz is used. When a second port of at least one second switch circuit is in a connected state, two channels of orthogonal second baseband signals (for example, second analog baseband signals) are processed by a second analog signal processing module, to obtain a second intermediate-frequency analog signal. A sixth radio frequency signal processing module obtains the second intermediate-frequency analog signal, and performs radio frequency power amplification on the second intermediate-frequency analog signal, to obtain the fourth radio frequency signal whose communication frequency is less than or equal to 3 GHz. Then, the fourth radio frequency signal is transmitted through a second antenna, so that the fourth radio frequency signal whose communication frequency is less than or equal to 3 GHz can be transmitted.

### Scenario 2: use of both a millimeter wave band and an existing 4G communication frequency band

In this embodiment of this application, when the transceiver apparatus works in a communication frequency band less than 6 GHz, for example, receives a radio frequency signal whose communication frequency is less than 6 GHz, a first analog signal processing module (which is equivalent to a zero-intermediate-frequency receiving architecture in the conventional technology) is used for implementation. For another example, when the transceiver apparatus transmits a radio frequency signal whose communication frequency is less than 6 GHz, a second analog signal processing module (which is equivalent to a zero-intermediate-frequency transmitting architecture in the conventional technology) is used for implementation. When the transceiver apparatus works in the millimeter wave band, for example, receives a radio frequency signal in the millimeter wave band, at least two first radio frequency signal processing modules and a first analog signal processing module (namely, a "two-time" down-conversion structure) are used for implementation. For another example, when the transceiver apparatus transmits a radio frequency signal in the millimeter wave band, at least two fourth radio frequency signal processing modules and a second analog signal processing module (namely, a "two-time" up-conversion structure) are used for implementation.

It may be understood that, the transceiver apparatus provided in this application can reuse a 4G architecture in a communication frequency band less than 6 GHz.

### Scenario 3: support of a millimeter wave communication frequency band and support of both 15 GHz and 60 GHz

In the conventional technology, to enable a zero-intermediate-frequency transceiver architecture or a superheterodyne transceiver apparatus with two-time frequency conversion to support both a communication frequency band with a first frequency and a communication frequency band with a second frequency, where a difference between the first frequency and the second frequency is greater than a specified target threshold, for example, the first frequency is 15 GHz, and the second frequency is 60 GHz, it needs to be ensured that a frequency of a local oscillator signal is between 15 GHz and 60 GHz. The bandwidth is very wide, resulting in undoubtedly increasing design difficulty.

According to the transceiver apparatus described in this application, when the transceiver apparatus works in a communication frequency band of 15 GHz, for example, receives a radio frequency signal whose communication frequency is 15 GHz, a first analog signal processing module (which is equivalent to a zero-intermediate-frequency receiving architecture in the conventional technology) is used for implementation. For another example, when the transceiver apparatus transmits a radio frequency signal whose communication frequency is 15 GHz, a second analog signal processing module (which is equivalent to a zero-intermediate-frequency transmitting architecture in the conventional technology) is used for implementation. When the transceiver apparatus works in a communication frequency band of 60 GHz, for example, receives a radio frequency signal whose communication frequency is 60 GHz, at least two first radio frequency signal processing modules and a first analog signal processing module (namely, a "two-time" down-conversion structure) are used for implementation. For another example, when the transceiver apparatus transmits a radio frequency signal whose communication frequency is 60 GHz, at least two fourth radio frequency signal processing modules and a second analog signal processing module (namely, a "two-time" up-conversion structure) are used for implementation. In an entire implementation process, a narrowband frequency source can be used to provide a local oscillator signal, to reduce design difficulty.

In conclusion, because the transceiver apparatus provided in this application uses a reused structure, the transceiver apparatus can receive and transmit radio frequency signals with different communication frequencies by being switched by using a switch.

An embodiment of the present invention further provides a computer-readable storage medium. The computer-readable storage medium stores instructions. When the instructions are run on a baseband processor, the baseband processor is enabled to perform one or more steps in the method described in any one of the foregoing embodiments. When being implemented in a form of a software functional unit and sold or used as an independent product, the modules in the foregoing apparatus may be stored in the computer-readable storage medium. Based on such an understanding, the technical solutions of this application essentially, or a part contributing to the conventional technology, or all or some of the technical solutions may be implemented in the form of a computer software product. The computer software product is stored in a computer-readable storage medium.

The foregoing computer-readable storage medium may be an internal storage unit of a device described in the foregoing embodiment, for example, a hard disk or a memory. The foregoing computer-readable storage medium may be alternatively an external storage device of the foregoing device, for example, a plug-connected hard disk, a smart media card (Smart Media Card, SMC), a secure digital (Secure Digital, SD) card, or a flash card (Flash Card). Further, the foregoing computer-readable storage medium may further include both the internal storage unit and the external storage device of the foregoing device. The foregoing computer-readable storage medium is configured to store a computer program and other program and data that are needed by the foregoing device. The foregoing computer-readable storage medium may be further configured to temporarily store data that has been output or is to be output.

A person of ordinary skill in the art may understand that all or some of the processes of the methods in the foregoing embodiments may be implemented by a computer program instructing related hardware. The computer program may be stored in a computer-readable storage medium. When the program is executed, the processes of the foregoing method embodiments can be performed. The foregoing storage medium includes various media that can store program code, such as a ROM, a RAM, a magnetic disk, and an optical disc.

The steps of the method in embodiments of this application may be adjusted in sequence, combined, or deleted based on an actual requirement.

The modules in the apparatus in embodiments of this application may be combined, divided, or deleted based on an actual requirement.

It may be understood that a person of ordinary skill in the art may be aware that, in combination with the examples described in embodiments disclosed in this application, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can understand that functions described with reference to various illustrative logical blocks, modules, and algorithm steps disclosed in embodiments of this application may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium, for example, a data storage medium, or a communication medium that include any medium that facilitates transmission of a computer program from one place to another place (for example, according to a communications protocol). In this manner, the computer-readable medium may generally correspond to (1) a non-transitory tangible computer-readable storage medium or (2) a communication medium, for example, a signal or a carrier. The data storage medium may be any usable medium that can be accessed by one or more computers or one or more processors to retrieve instructions, code, and/or data structures for implementing the technologies described in this application. The computer software product may include a computer-readable medium.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, the division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes a plurality of instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A receiving apparatus, wherein the apparatus comprises at least two first radio frequency signal processing modules and a first analog signal processing module, and the at least two first radio frequency signal processing modules are connected to the first analog signal processing module by using at least one first switch circuit;
the first radio frequency signal processing module is configured to obtain a radio frequency signal, to obtain a first analog signal; and
the first analog signal processing module is configured to obtain a first baseband signal based on the first analog signal.

2. The apparatus according to claim 1, wherein the at least two first radio frequency signal processing modules comprise a second radio frequency signal processing module and a third radio frequency signal processing module, the second radio frequency signal processing module is connected to a first port of the at least one first switch circuit, and the third radio frequency signal processing module is connected to a second port of the at least one first switch circuit; and
the second radio frequency signal processing module is configured to obtain a first radio frequency signal, the third radio frequency signal processing module is configured to obtain a second radio frequency signal, and the first radio frequency signal and the second radio frequency signal fall within different frequency ranges.

3. The apparatus according to claim 1 or 2, wherein the first port of the at least one first switch circuit is in a connected state;
the second radio frequency signal processing module is configured to obtain the first radio frequency signal and generate a first intermediate-frequency analog signal, wherein the first intermediate-frequency analog signal is obtained by performing frequency mixing on the first radio frequency signal; and
the first analog signal processing module is configured to generate the first baseband signal based on the first intermediate-frequency analog signal.

4. The apparatus according to claim 1 or 2, wherein the second port of the at least one first switch circuit is in a connected state;
the third radio frequency signal processing module is configured to obtain the second radio frequency signal and generate a first amplified analog signal, wherein the first amplified analog signal is obtained by amplifying the second radio frequency signal; and
the first analog signal processing module is configured to generate the first baseband signal based on the first amplified analog signal.

5. The apparatus according to claim 1 or 2, wherein the second radio frequency signal processing module comprises a first low noise amplifier and a first down-conversion mixer;
the third radio frequency signal processing module comprises a second low noise amplifier; and
the first analog signal processing module comprises a first amplifier and at least two first quadrature I/Q processing circuits, a first I-channel processing circuit comprises a second down-conversion mixer, a first variable-gain amplifier, a first low-pass filter, and a second amplifier, and a first Q-channel processing circuit comprises a third down-conversion mixer, a second variable-gain amplifier, a second low-pass filter, and a third amplifier.

6. The apparatus according to any one of claims 1 to 5, wherein the apparatus further comprises at least one first antenna, and the at least one first antenna is connected to at least one of the second radio frequency signal processing module or the third radio frequency signal processing module.

7. A signal processing method, wherein the method is applied to a receiving apparatus, the apparatus comprises at least two first radio frequency signal processing modules and a first analog signal processing module, the at least two first radio frequency signal processing modules are connected to the first analog signal processing module by using at least one first switch circuit, and the method comprises:
obtaining, by the first radio frequency signal processing module, a radio frequency signal, to obtain a first analog signal; and
obtaining, by the first analog signal processing module, a first baseband signal based on the first analog signal.

8. The method according to claim 7, wherein the at least two radio frequency signal processing modules comprise a second radio frequency signal processing module, the second radio frequency signal processing module is connected to a first port of the at least one first switch circuit, and the first port of the at least one first switch circuit is in a connected state; the obtaining, by the first radio frequency signal processing module, a radio frequency signal, to obtain a first analog signal comprises:
obtaining, by the second radio frequency signal processing module, a first radio frequency signal, and generating a first intermediate-frequency analog signal, wherein the first intermediate-frequency analog signal is obtained by performing frequency mixing on the first radio frequency signal; and
the obtaining, by the first analog signal processing module, a first baseband signal based on the first analog signal comprises:
generating, by the first analog signal processing module, the first baseband signal based on the first intermediate-frequency analog signal.

9. The method according to claim 7, wherein the at least two radio frequency signal processing modules comprise a third radio frequency signal processing module, the third radio frequency signal processing module is connected to a second port of the at least one first switch circuit, and the second port of the at least one first switch circuit is in a connected state;
the obtaining, by the first radio frequency signal processing module, a radio frequency signal, to obtain a first analog signal comprises:
obtaining, by the third radio frequency signal processing module, a second radio frequency signal, and generating a first amplified analog signal, wherein the first amplified analog signal is obtained by amplifying the second radio frequency signal; and
the obtaining, by the first analog signal processing module, a first baseband signal based on the first analog signal comprises:
generating, by the first analog signal processing module, the first baseband signal based on the first amplified analog signal.

10. A transmitting apparatus, wherein the apparatus comprises at least two fourth radio frequency signal processing modules and a second analog signal processing module, and the at least two fourth radio frequency signal processing modules are connected to the second analog signal processing module by using at least one second switch circuit;
the second analog signal processing module is configured to obtain a second analog signal based on a second baseband signal; and
the fourth radio frequency signal processing module is configured to obtain a radio frequency signal based on the second analog signal.

11. The apparatus according to claim 10, wherein the at least two fourth radio frequency signal processing modules comprise a fifth radio frequency signal processing module and a sixth radio frequency signal processing module, the fifth radio frequency signal processing module is connected to a first port of the at least one second switch circuit, and the sixth radio frequency signal processing module is connected to a second port of the at least one second switch circuit; and
the fifth radio frequency signal processing module is configured to generate a third radio frequency signal, the sixth radio frequency signal processing module is configured to generate a fourth radio frequency signal, and the third radio frequency signal and the fourth radio frequency signal fall within different frequency ranges.

12. The apparatus according to claim 10 or 11, wherein the first port of the at least one second switch circuit is in a connected state;
the second analog signal processing module is configured to generate a second intermediate-frequency analog signal based on the second baseband signal; and
the fifth radio frequency signal processing module is configured to obtain the second intermediate-frequency analog signal and generate the third radio frequency signal, wherein the third radio frequency signal is obtained by performing frequency mixing on the second intermediate-frequency analog signal.

13. The apparatus according to claim 10 or 11, wherein the second port of the at least one second switch circuit is in a connected state;
the second analog signal processing module is configured to generate a second intermediate-frequency analog signal based on the second baseband signal; and
the sixth radio frequency signal processing module is configured to obtain the second intermediate-frequency analog signal and generate the fourth radio frequency signal, wherein the fourth radio frequency signal is obtained by performing radio frequency power amplification on the second intermediate-frequency analog signal.

14. The apparatus according to claim 10 or 11, wherein the second analog signal processing module comprises at least two second quadrature I/Q processing circuits and a fourth amplifier, a second I-channel processing circuit comprises a first up-conversion mixer, a third variable-gain amplifier, a third low-pass filter, and a fifth amplifier, and a second Q-channel processing circuit comprises a second up-conversion mixer, a fourth variable-gain amplifier, a fourth low-pass filter, and a sixth amplifier;
the fifth radio frequency signal processing module comprises a first radio frequency power amplifier and a third up-conversion mixer; and
the sixth radio frequency signal processing module comprises a second radio frequency power amplifier.

15. The apparatus according to any one of claims 10 to 14, wherein the apparatus further comprises at least one second antenna, and the at least one second antenna is connected to at least one of the fifth radio frequency signal processing module or the sixth radio frequency signal processing module.

16. A signal processing method, wherein the method is applied to a transmitting apparatus, the apparatus comprises at least two fourth radio frequency signal processing modules and a second analog signal processing module, the at least two fourth radio frequency signal processing modules are connected to the second analog signal processing module by using at least one second switch circuit, and the method comprises:
obtaining, by the second analog signal processing module, a second analog signal based on a second baseband signal; and
obtaining, by the fourth radio frequency signal processing module, a radio frequency signal based on the second analog signal.

17. The method according to claim 16, wherein the at least two fourth radio frequency signal processing modules comprise a fifth radio frequency signal processing module, the fifth radio frequency signal processing module is connected to a first port of the at least one second switch circuit, and the first port of the at least one second switch circuit is in a connected state; and the obtaining, by the second analog signal processing module, a second analog signal based on a second baseband signal comprises:
generating, by the second analog signal processing module, a second intermediate-frequency analog signal based on the second baseband signal; and
the obtaining, by the fourth radio frequency signal processing module, a radio frequency signal based on the second analog signal comprises:
obtaining, by the fifth radio frequency signal processing module, the second intermediate-frequency analog signal, and generating a third radio frequency signal, wherein the third radio frequency signal is obtained by performing frequency mixing on the second intermediate-frequency analog signal.

18. The method according to claim 16, wherein the at least two fourth radio frequency signal processing modules comprise a sixth radio frequency signal processing module, the sixth radio frequency signal processing module is connected to a second port of the at least one second switch circuit, and the second port of the at least one second switch circuit is in a connected state; and the obtaining, by the second analog signal processing module, a second analog signal based on a second baseband signal comprises:
generating, by the second analog signal processing module, a second intermediate-frequency analog signal based on the second baseband signal; and
the obtaining, by the fourth radio frequency signal processing module, a radio frequency signal based on the second analog signal comprises:
obtaining, by the sixth radio frequency signal processing module, the second intermediate-frequency analog signal, and generating a fourth radio frequency signal, wherein the fourth radio frequency signal is obtained by performing radio frequency power amplification on the second intermediate-frequency analog signal.

19. A transceiver apparatus, comprising:
the receiving apparatus according to any one of claims 1 to 6 and the transmitting apparatus according to any one of claims 10 to 15.
